# EUROPEAN PATENT APPLICATION

(11) **EP 2 219 145 A1**
(43) Date of publication of application: **18.08.2010**
(21) Application number: 09305142.3
(22) Date of filing: 13.02.2009
(51) Int. Cl.: G06Q 20/00

(54) **Method for ordering via a communication network as well as related application server and handset**

(71) Applicant: FRANCE TELECOM, 75015 Paris (FR)
(72) Inventor: Stefanescu, Claudiu, London NW6 3BJ (GB)
(74) Representative: Cabinet Plasseraud

(57) **Abstract**

Method for allowing a user (9) to order a product/service via a communication network by means of a handset (1), said user having registered with an operator of the communication network, the user registration comprising the storage in a database (6) of the operator of a user identifier associated with user related information including a physical address and/or billing information. Products/services related information are pushed to the user handset from the communication network, so as to enable the user handset to store and display a catalogue of products/services offline ; and, in response to the user handset having sent, in association with said user identifier, an order message for a selection of product/service from said catalogue over the communication network, user related information stored in association with said user identifier in said database is retrieved, so as to allow delivery and/or billing of said product/service to the user.

## Description

The present invention relates to product and/or service ordering.

Recently, product and/or service ordering over communication networks has increased dramatically.

A common way of ordering products and/or services is by using a virtual "shopping cart" model over the Internet. This model consists for a user in browsing a retailer Web site online, and selecting items which are then metaphorically added to the user's shopping cart.

When the number of available products and/or services is high, or when the retailer Web site architecture is not intuitive, searching for a specific item can be particularly time consuming and troublesome.

Moreover, for the ordering to be completed, the user is generally presented with Web pages that prompt him to manually enter login and password for authentication purposes on the one hand, and user details such as billing details and address on the other hand.

This mode of operation is limiting in particular in terms of :
- data connection speed, which can lead to a slow and frustrating browsing experience;
- data charges for generated traffic, especially when the user is charged on a time basis ;
- graphical rendering, which can lead to excessive scrolling and text input, especially when using a handset which is not adapted for such mode of operation, e.g. due to a very limited size screen or lack of a handy keyboard ;
- reliability, as entry on a handset of login, password and user details may be error-prone ; and
- security, as transmission over the network of login, password and user details for each transaction increases the risk that such sensitive information be intercepted and decrypted.

US 5,960,411 discloses a method and a system in which the item is ordered over the Internet, without using a shopping cart ordering model.

To do so, a server system first collects information from a user through a Web page, preferably after the user has been properly identified with a login.

Then, when the user wishes to place an order by means of a client system embedding a browser, he selects with a single-action an item displayed online from the server system. The single-action causes a request to order the item along with an identifier of the user to be generated and sent to the server system.

Upon receiving the request, the server system can retrieve the previously stored user information for the user identified by said identifier. Purchase can then be completed by the server system.

So the method disclosed in US 5,960,411 may speed up a bit the ordering process as compared to the shopping cart model, as it reduces the number of purchaser interactions needed to place an order and the amount of sensitive information that is transmitted between the client system and the server system.

Nevertheless the above mentioned drawbacks are still present with the method of US 5,960,411.

Indeed, because the ordering process is performed in an online manner through Internet Web pages, the data connection speed, the data charges for generated traffic and graphical rendering may still be limiting.

And because user-specific information and/or identification information must still, at least initially, be entered manually on the client system and transmitted over the Internet to the server system, reliability and security may still be of concern.

Besides, if a user wishes to order items from several sellers having respective server systems, he would have to provide his details independently to each and every server system which would each store them. This repetitive, redundant and error-prone process thus increases security risks.

An object of the present invention is to propose an improved model for product and/or service ordering.

The invention proposes a method for allowing a user to order at least one product and/or service via a communication network by means of a handset, said user having registered with an operator of the communication network in order to communicate over said communication network, the registration of said user comprising the storage in a database of the operator of a user identifier associated with user related information including at least one of a physical address and billing information. The method comprises :
- pushing products and/or services related information to the user handset from the communication network, so as to enable the user handset to store and display a catalogue of products and/or services offline ;
- in response to the user handset having sent, in association with said user identifier, an order message for a selection of at least one product and/or service from said catalogue over the communication network, retrieving user related information stored in association with said user identifier in said database, so as to allow delivery and/or billing of said at least one product and/or service to the user.

With this method, users can thus be delivered and/or charged for purchased products and/or services with few and simple steps and operations. In particular, the need for a shopping cart system is avoided.

Also, because the catalogue is pushed and then stored locally on the handset, the user can browse it offline, thus eliminating the problems relating to data connection speed and data charges for generated traffic as they exist with the prior art methods. The catalogue can also have a better and adapted graphical rendering, especially for handsets with limited capacities, such as mobile handsets.

In addition, because user related information allowing delivery and/or billing of the product(s) and/or service(s) ordered by the user are retrieved automatically in the communication network, thus eliminating the need for further manual entry of sensitive information, reliability and security are also increased.

The invention also proposes a communication network managed by an operator for allowing a user to order at least one product and/or service by means of a handset according to the above mentioned method, said user having registered with said operator of the communication network in order to communicate over said communication network, the registration of said user comprising the storage in a database of the operator of a user identifier associated with user related information including at least one of a physical address and billing information. The communication network comprises :
- a pushing unit for pushing products and/or services related information to the user handset, so as to enable the user handset to store and display a catalogue of products and/or services offline ;
- a retrieving unit for retrieving, in response to the user handset having sent, in association with said user identifier, an order message for a selection of at least one product and/or service from said catalogue over the communication network, user related information stored in association with said user identifier in said database, so as to allow delivery and/or billing of said at least one product and/or service to the user.

The invention also proposes an application server for use in a communication network managed by an operator for allowing a user to order at least one product and/or service by means of a handset according to the above mentioned method, said user having registered with said operator of the communication network in order to communicate over said communication network, the registration of said user comprising the storage in a database of the operator of a user identifier associated with user related information including at least one of a physical address and billing information. The application server comprises :
- a push controller for controlling the pushing of products and/or services related information to the user handset, so as to enable the user handset to store and display a catalogue of products and/or services offline ;
- a retrieving controller for controlling, further to receiving an order message for a selection of at least one product and/or service from said catalogue sent by the user handset in association with said user identifier, the retrieval of user related information stored in association with said user identifier in said database, so as to allow delivery and/or billing of said at least one product and/or service to the user.

The invention also proposes a handset arranged for being used by a user having registered with an operator of a communication network in order to communicate over said communication network, the registration of said user comprising the storage in a database of the operator of a user identifier associated with user related information including at least one of a physical address and billing information. The handset comprises :
- a receiver for receiving products and/or services related information pushed from the communication network ;
- a memory and a display unit for storing and displaying a catalogue of products and/or services offline, based at least on the received products and/or services related information ;
- a selection unit for allowing the user to make a selection of at least one product and/or service from said catalogue ;
- a transmitter for sending, in association with said user identifier, an order message for said selection over the communication network.

The invention also proposes a third party server for offering products and/or services to users holding respective handsets via a communication network, the users having registered with an operator of the communication network in order to communicate over said communication network, the registration of each user comprising the storage in a database of the operator of a user identifier associated with user related information including at least one of a physical address and billing information. The third party server comprises :
- a transmitter for transmitting products and/or services related information over the communication network, so as to enable user handsets to store and display a catalogue of products and/or services offline ;
- a receiver for receiving an order message for a selection of at least one product and/or service made from said catalogue by a user, along with user related information retrieved in the communication network, so as to allow delivery and/or billing of said at least one product and/or service to said user.
   The preferred features of the above aspects which are indicated by the dependent claims may be combined as appropriate, and may be combined with any of the above aspects of the invention, as would be apparent to a person skilled in the art.
- FIG.1 shows an exemplary system for implementing the invention according to one embodiment ;
- FIG.2 is a diagram showing exemplary steps and message transmissions according to one embodiment of the invention ;
- FIGs 3A-3F show exemplary screen shots presented to a user at successive instants of an ordering process according to one embodiment of the invention.

The invention allows a user to order at least one product and/or service via a communication network by means of a handset.

Before starting an ordering process, this user has already registered with an operator of the communication network in order to communicate over said communication network.

As a non-limiting example, the user may hold a mobile handset and have a registration, e.g. a subscription, with a mobile operator of a mobile communication network. Such registration is very common, particularly with respect to radio cellular networks such as GSM (Global System for Mobile communications) and UMTS (Universal Mobile Telecommunication System), and can be seen as a pre-requisite for the user to communicate over the mobile communication network.

Of course, similar registration could take place with the operator of another type of communication network, such as the operator of a fixed PSTN (Public Switched Telephone Network) or an Internet access provider, for instance when the user holds a non-mobile handset.

During the registration process, the user is authenticated by any appropriate means. Moreover, a user identifier as well as other user related information are requested during registration. The user related information can include at least one of a physical address (i.e. an address at which mail can be sent and goods can be shipped to the user) such as the home mail address of the user, and billing information, e.g. credit card details, debit account details, etc. It may also include a name of the considered user, or any other user identity that enables to clearly and unambiguously identify the user. Other user related information can also be requested during registration, instead of or in addition to the ones mentioned above.

The user identifier and user related information obtained are stored in association in a database of the operator. The information stored in the database is normally used by the operator in relation to the use of its communication network. In particular, the operator can use the stored physical address to send paper documents (invoices, advertisement, etc.) to the user by mail. The operator can use the stored billing details to charge the user for the communications he makes on the communication network.

As it will appear from the following, the invention takes benefit from the information stored in the operator's database, to offer an improved and simplified ordering model.

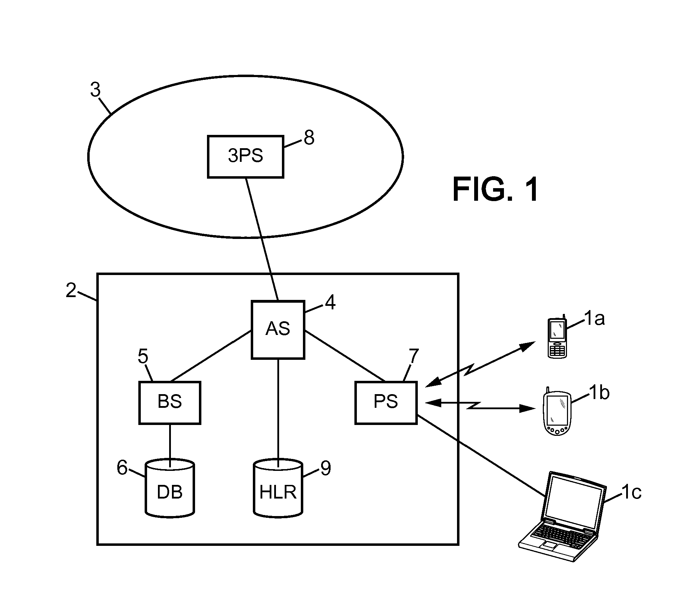

FIG.1 shows an exemplary system in which the invention can take place. This system comprises a communication network 2 managed by an operator. As mentioned above, the communication network 2 may be any kind of network, e.g. a mobile network, a fixed network, or other. Depending on its nature, the communication network 2 can help registered users communicate with appropriate handsets, which may include for instance a mobile phone 1a, a communicating personal digital assistant 1b, a computer 1c, or any other suitable communication device.

Among the communication means available between the communication network 2 and the handsets 1a-1c, there is a pushing unit such as a pushing server PS 7 which operates so as to transmit unsolicited information to the handsets 1a-1c. This means that the handsets 1a-1c do not have to have a communication in progress with the communication network 2 to be able to receive information from the pushing server PS 7. Any push technology can be implemented by the pushing server PS 7 in cooperation with some or all the handsets 1a-1c, such as HTTP (Hypertext Transfer Protocol) push, Java applets, email, SMS (Short message service), MMS (Multimedia Messaging Service), or other. The pushing unit is advantageously controlled by a controller of the application server AS 4.

In the non-limiting example shown in FIG.1, the communication network 2 includes an application server AS 4 whose role will be detailed further in relation to the ordering model offered by the invention.

As explained above, the communication network 2 includes a database for storing registered user identifiers and associated user related information including at least one of a physical address and billing information.

This database can be a general database, such as a Home Location Register HLR 9 for the case of radio cellular networks, which is used for general purposes not necessarily related to the ordering process, such as subscriber management, mobility management, etc.

As an alternative, the database storing registered user identifiers and associated user related information may be a specific database DB 6 whose main purpose is related to the ordering process. Such specific database DB 6 may be connected to or even included in a server such as a billing server BS 5 capable of interacting with the application server AS 4. The billing server also plays the role of a retrieving unit for retrieving, and possibly of an updating unit for updating, information stored in the specific database DB 6, especially user related information stored in association with a given user identifier. Retrieval of the user related information is performed advantageously under control of a controller of the application server AS 4.

A combination of a general database 9 and a specific database DB 6 is also possible. In this case, the specific database DB 6 may be inputted with information coming from the general database 9 for example.

In addition to the operator's communication network 2, the system of FIG.1 can also comprise another part 3 which is not under the responsibility of the operator of the communication network 2. This part 3 may consist in an open network, such as the Internet, or any other subsystem that could be used by third parties for offering products and/or services.

In particular, the part 3 of the system of FIG.1 may include at least one third party server 3PS 8 capable of offering products and/or services through the communication network 2 to users holding handsets 1a-1c. Alternatively, the third party server 3PS 8 may be located within the communication network 2, or anywhere else.

One skilled in the art will understand that the variants of the system of FIG.1 may be envisaged within the framework of the present invention.

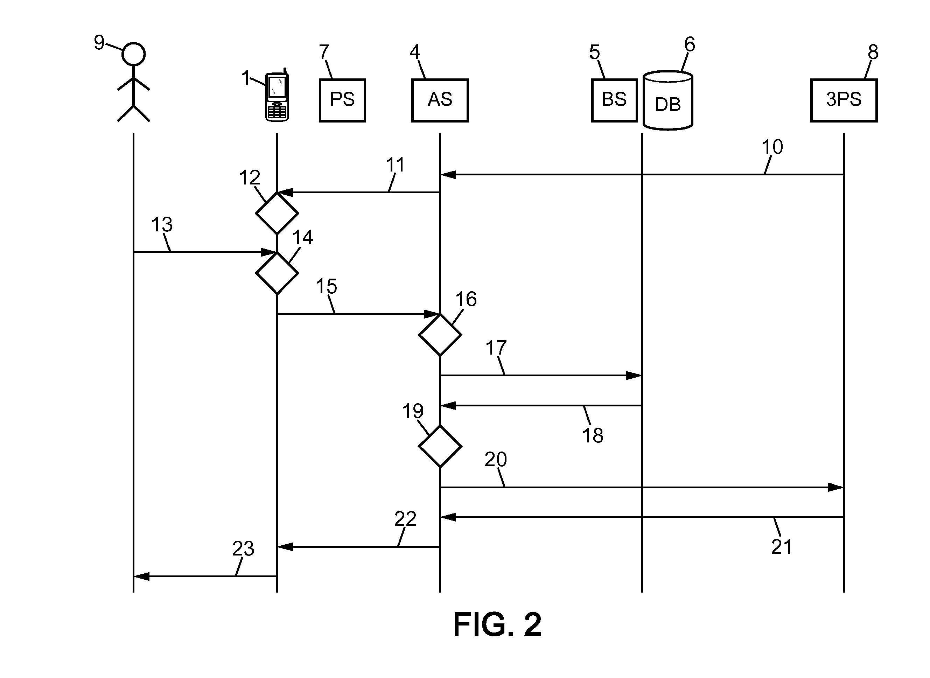

FIG.2 shows an exemplary diagram for carrying out ordering according to an embodiment of the invention, in a system of the type shown in FIG.1.

In this example, it is assumed that the third party server 3PS 8 holds products and/or services related information. The products and/or services in question can be of any type. They may include soft products and/or services, i.e. applications that may be loaded and run on a handset 1a-1c. Alternatively or in addition, they may include physical products, such as goods from a shop, that need to be physically delivered to the user by use of shipment means independent of the communication network 2 (e.g. by mail, via a logistics services company, etc.).

Products and/or services related information is first pushed to the handset 1 of a user 9. This may be done in two steps. In a first step 10, the third party server 3PS 8 sends the products and/or services related information to the application server AS 4 of the communication network 2, if the latter does not already have that information. Once the products and/or services related information is available in the application server 4, it can be transmitted from the communication network 2 to the handset 1. This transmission is made as a push transmission, advantageously through the push server PS 7 under control of the application server AS 4 (step 11).

The pushed information is arranged such that the handset 1 can display it in the form of a catalogue of products and/or services offline, i.e. a file listing the items offered for purchase.

The pushed information may contain all the information needed for the handset 1 to display the catalogue. In other words, the pushed information may consist of the catalogue in whole.

Alternatively, the pushed information may contain only part of the information needed for the handset 1 to display the catalogue, another part of the needed information being already stored in the handset 1.

Also, the pushed information may be predetermined and independent of the handset 1, which means that any user would receive the same catalogue of products and/or services.

The data format of the catalogue may be pre-defined and agreed upon by both the third party and the operator. This can be done through an API (Application Programming Interface) defined between the operator and any third party wishing to offer products and/or services to users, and can be implemented as a Web portal through which the third party can enter the description of its products and/or services. The third party may need to provide the information agreed upon though the API, such as number of items, individual item prices, item descriptions, item pictures, etc.

Alternatively, the pushed information may be adapted depending on the handset 1. As an example, the user 9 may have previously sent preferences to the application server 4 or to the third party server 3PS 8. Those preferences may relate to the form of the pushed information the handset 1 of said user 9 is capable of receiving, for instance in terms of push technology supported, data format, etc. They may also relate to the information content itself. As an example, if the user 9 is interested in products of type A but not of type B, it may indicate it, such that the information later pushed to the handset 1 from the communication network relate to products of type A but not of type B.

The catalogue of products and/or services is stored locally on the handset 1 (step 12). This enables the user 9 to refer to the catalogue any time he wants while remaining offline, i.e. with no need to initiate a communication with the communication network.

The user 9 can thus browse through the catalogue offline and select the item(s), i.e. at least one product and/or service, he would like to order, using his handset 1 (step 13). The navigation of the catalogue and/or the item selection may advantageously be made in a simple way, which does not require numerous and complex actions. A simple keypad and/or a limited number of keys and/or a joystick of the handset 1 may be sufficient to achieve this.

Once the user has made the selection, he places the order (step 14). Again, this may advantageously be done with a very limited number of operations. For instance, the order placement may be achieved with a single action, such as with the activation of one hard or soft key.

When more than one product and/or service is selected from the catalogue, a single order may be compiled and placed for all selected products and/or services simultaneously.

An order message for the selected item(s) is sent from the handset 1 over the communication network. It advantageously contains an identifier and a quantity for each selected item. In the non-limiting example shown in FIG.2, the order message is sent to the application server AS 4 (step 15). This transmission can be achieved in a multitude of ways, such as via SMS, MMS, email, etc.

The order message is sent in association with said user identifier. For example, the order message may incorporate the user identifier. According to another example, the communication network may be able to derive the user identifier from the order message transmission from the handset 1 of the user 9.

Advantageously, the user identifier may include a subscriber directory number, such as a phone number of the user 9, e.g. the MSISDN (Mobile Station ISDN (Integrated Services Digital Network) Number) of the user 9 in a mobile communication context like GSM or UMTS. Many other user identifier examples would be suitable as well, as it will appear to one skilled in the art. Whatever the type of user identifier may be, the operator must be capable of associating a corresponding user to a given identifier.

Once the order message is transmitted, the information relating to the user 9 (physical address and/or billing information and/or other) and stored in the database of the operator mentioned above with reference to FIG.1 is retrieved, advantageously under control of the application server AS 4. Because, the user related information is retrieved automatically from the communication network, there is no need for the user 9 to enter it again manually neither for authentication purpose (as the user is already identified with the communication network operator) nor for order completion purpose. It is indeed taken benefit from the reliable information already known by the operator.

Reliability and security are thus highly improved, compared to the prior art ordering methods. Besides, the same user related information may be used an unlimited number of times and by an unlimited number of authorized third parties, while the user has registered only once with the operator.

In the non-limiting example shown in FIG.2, the application server AS 4, upon receiving the order message, checks the user identifier associated with said order message and uses it to request the corresponding user related information. The request is sent to the billing server BS 5 (step 17), which in turn extracts from the database DB 6 the user related information it stores in association with said user identifier.

The retrieved user related information can then be used for delivery and/or billing of the at least one product and/or service ordered by the user 9.

To do so, in the non-limiting example shown in FIG.2, the billing server BS 5 sends the retrieved user related information to the application server AS 4 (step 18). The application server AS 4 receives and possibly processes at least some of the received user related information (step 19) and adds them into an updated order message that is sent to the third party server 3PS 8 (step 20). The updated order message transmission is advantageously secured, e.g. by means of encryption or other.

There are other ways, for the third party server 3PS 8, of obtaining the order placed by the user 9 together with the appropriate user related information, as it will appear to one skilled in the art. As an example, the order message sent by the handset 1 in step 15 may be received at the third party server 3PS 8, and the information relating to the user 9 may be transmitted from the billing server BS 5 directly to the third party server 3PS 8.

Advantageously, once the user related information retrieved, it may be stored locally in the application server AS 4 for future usage, thus eliminating further signalling between the application server AS 4 and billing server BS 5 and/or database DB 6 for future purchases.

At this stage, the third party advantageously holds all the information it needs to deliver and/or bill the ordered product(s) and/or service(s) to the user 9.

As a first example, when the order relates to physical product(s) and the user related information received by the third party server 3PS 8 include a physical address and possibly a name of the user 9, those information can be used to ship the ordered physical product(s) to the user 9, e.g. by mail or other.

As a second example, whatever the ordered item(s) may be, when the user related information received by the third party server 3PS 8 include billing details, the latter can be used to bill the user 9, e.g. by debiting his bank account or other.

Advantageously, an acknowledgment of receipt for the order may be sent to the user 9. For instance, as shown in FIG.2, the third party server 3PS 8 may send an acknowledgment of receipt to the application server AS 4 (step 21). The application server AS 4 may then forward this confirmation to the handset 1 (step 22), which may display it to the user 9 (step 23).

The above described example involves an application server of the operator, the user handset acting as a client (i.e. embedding a client arranged for cooperating with the application server). However, other embodiments which would not require such client/server architecture may be envisaged within the scope of the present invention, as it will appear to one skilled in the art.

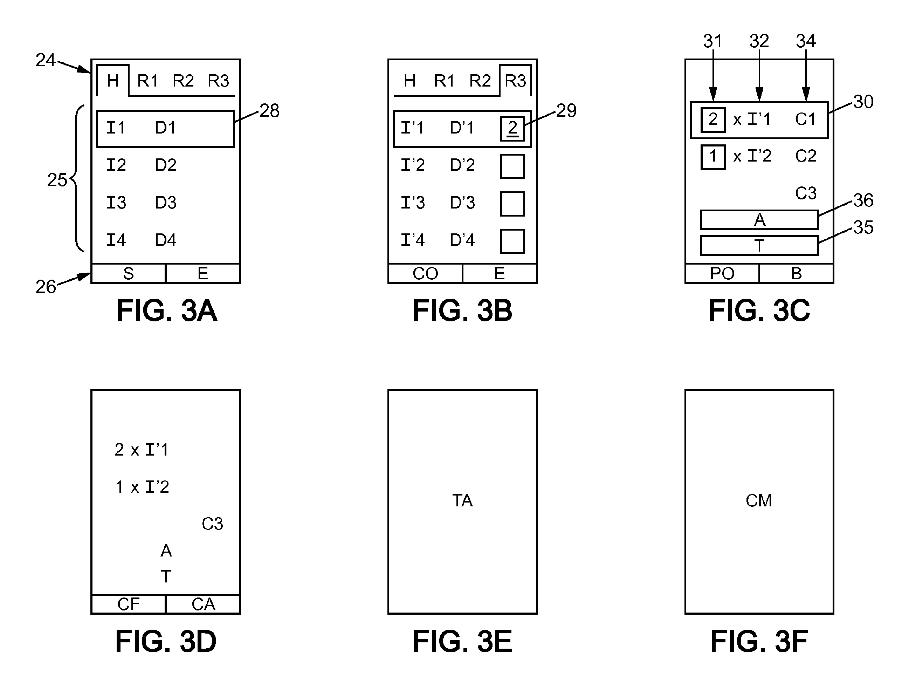

Now an exemplary handset implementation for placing an order according to the invention will be described with reference to FIGs 3A-3F. Those figures show an exemplary screen of the user handset (e.g. one of the handsets 1, 1a-1c mentioned above) at successive instants of the ordering process. One skilled in the art will understand that the Man Machine Interface shown in those figures is for illustrative purpose only, and many other presentations may be used instead or in addition.

It is considered that the offline catalogue of products and/or services has already been pushed to the user handset and is now stored in a memory of the handset.

FIG.3A shows a screen of the handset in which part of the catalogue is displayed. In the illustrated example, the screen is divided into three main parts. At the top 24, several tabs H, R1-R3 appear. The tabs correspond to respective sets of information selectively displayed in the central part 25 of the screen. The user can navigate between the tabs and select any one of them.

In FIG.3A, the tab H (for Homepage) is selected such that the corresponding set of information is displayed. This set of information includes a number of items I1-I4 each associated with a respective description D1-D4 that may include e.g. text, prices, etc. As an example, the items I1-I4 of tab H may relate to a last ordered item, special offers, preferences, options, etc.

The other tabs R1-R3 may relate to products and/or services offered by respective third parties (stores, retailers, etc). Because the operator of the communication network can manage the ordering process, it can put the catalogue in a format which is independent of the third parties. In this way, a single interface can be presented to the user, whoever the third parties may be. This is in contrast with the prior art method, in which each third party has its own Web site with specific architecture and presentation for the offered products and/or services.

The user can navigate between the items displayed. The current item may be highlighted by any means, such as a specific color or background 28.

The navigation between the tabs and the items displayed, i.e. the navigation of the catalogue, can be achieved with very simple means. For example, at most four keys of the handset may be used. Those four keys may be keys of a keypad of the handset, and may correspond to four different directions, such as right/left for selection of a tab, and up/down for selection of an item within a selected tab. A joystick, a knob, a touch screen of the handset are other non-limiting examples of means that may be used to browse the catalogue.

Besides, selection of any tab or item may be achieved with a single action, such as pressing a hard or soft key of the handset.

Due to the limited amount of information provided by the catalogue, it will be understood that browsing is made much easier than for a Web site for example. Indeed, graphical rendering can be adapted to the size and mode of operation of a handset, such as a mobile handset, having e.g. a limited size screen and/or no handy keyboard.

Moreover, since the catalogue is stored in the handset, it can be accessed quickly and browsed offline, thus avoiding inconvenience that may be implied by low data connection speed and/or expensive data charges for generated traffic.

Also, initial pushing of the catalogue as well as later pushing of information for updating the catalogue can be performed from the communication network during low traffic periods, e.g. at night. In this way, communication channels of the communication network can be kept available for high traffic periods.

At the bottom 26 of the screen shown in FIG.3A, two soft keys are shown. The soft key S may be used to select a given item among I1-I4, while the soft key E may be used to exit the offline catalogue.

In FIG.3B, the tab R3 and the item I'1 (highlighted) have been selected. A quantity box 29 may then become active and a cursor may flash to guide the user to make an entry. The quantity for an item can be entered using numeric keys or any other appropriate entry means.

Once the user is satisfied with his selection (which may comprise several items from different stores as he navigates, without the need of a "basket" or "cart"), he can proceed to checkout. Checkout can be achieved in a very simple way, such as a single action. For example, the bottom bar may include a checkout soft key CO to this end.

Once the user has hit the soft key CO, he may be presented with an order review page as shown in FIG.3C. In this example, the selected items 32 are summed up together with the respective requested quantities 31 and the corresponding costs 34. Here the user can still modify the quantities of products and/or services ordered, as shown by the highlighting indicator 30. A total cost C3 (=C1+C2) may also be displayed on that order review page.

Some other options may be available, such as the possibility of defining a delivery time T or date 35 (e.g. selected between "as soon as possible", "in xx minutes/hours", etc.) and choosing a delivery address A 36 different from the address registered with the operator (e.g. by manually entering an office address, while the registered address, which is the default option, is a home address of the user). Other options that the third party might offer may be used as well.

When satisfied with his order, the user can place the order in a simple way, such as a single action. The single action may consist of the activation of only one key of the handset, such as a place order soft key PO. Other single actions may be suitable as well. Responsive to one of those single actions, the order message may be sent over the communication network.

FIG.3D shows an advantageous final confirmation page for confirming the placed order. This page sums up the selected items together with their respective quantities 31, as well as the total cost C3 for the user. The predefined address A and delivery time T may also be shown in that page.

A confirmation soft key CF or other confirmation means may be used to ensure that the user is happy with his selection(s). If he is not, he may cancel the order by means of a cancel soft key CA or other cancellation means.

Once the order is placed and the order message has been sent over the communication network, a pop-up screen TA (for Transmission Acknowledgment) may be displayed on the user handset to confirm those actions. The order message is then processed as described above with reference to FIGs 1 and 2.

Finally, a confirmation message CM may displayed on the user handset, as shown in FIG.3F. This message may be sent in many different ways, such as via SMS, MMS or email. It indicates that the third party offering the ordered products and/or services has received the order.

It should be noted that all or part of the operations described above can be implemented by means of at least one computer program. For example, a respective computer program loaded and run on each one of a user handset, an application server and a third party server may be used.

## Claims

1. A method for allowing a user (9) to order at least one product and/or service via a communication network (2) by means of a handset (1;1a-1c), said user having registered with an operator of the communication network in order to communicate over said communication network, the registration of said user comprising the storage in a database (6;9) of the operator of a user identifier associated with user related information including at least one of a physical address and billing information, the method comprising :
- pushing products and/or services related information to the user handset from the communication network, so as to enable the user handset to store and display a catalogue of products and/or services offline ;
- in response to the user handset having sent, in association with said user identifier, an order message for a selection of at least one product and/or service from said catalogue over the communication network, retrieving user related information stored in association with said user identifier in said database, so as to allow delivery and/or billing of said at least one product and/or service to the user.

2. The method as claimed in claim 1, wherein said handset is a mobile handset (1a;1b) and said operator is a mobile operator of a mobile communication network (2).

3. The method as claimed in claim 1, wherein said user identifier includes a subscriber directory number.

4. The method as claimed in claim 1, wherein the retrieved user related information stored in association with said user identifier in said database (6;9) includes a name of said user.

5. The method as claimed in claim 1, wherein pushing products and/or services related information to the user handset (1;1a-1c) and retrieving user related information stored in association with said user identifier in said database (6;9) are carried out through an application server (4) of the operator, the user handset acting as a client.

6. The method as claimed in claim 5, wherein the products and/or services of the catalogue are managed by at least one third party (8), the order message for a selection of at least one product and/or service from said catalogue being received and modified by the application server (4) so as to include the retrieved user related information, before being forwarded to said third party.

7. The method as claimed in claim 6, wherein said products and/or services related information are transmitted to the application server (4) from the third party (8), before being pushed to the user handset (1;1a-1c).

8. The method as claimed in claim 1, wherein the catalogue is arranged for being navigated with at most four keys of the handset only.

9. The method as claimed in claim 1, wherein the selection of at least one product and/or service from said catalogue comprises the user entering a requested quantity of a product and/or service currently highlighted in said catalogue.

10. The method as claimed in claim 1, wherein the order message for a selection of at least one product and/or service from said catalogue is sent responsive to a single action being performed on the handset by the user.

11. A communication network (2) managed by an operator for allowing a user (9) to order at least one product and/or service by means of a handset (1;1a-1c) according to the method as claimed in any one of the foregoing claims, said user having registered with said operator of the communication network in order to communicate over said communication network, the registration of said user comprising the storage in a database (6;9) of the operator of a user identifier associated with user related information including at least one of a physical address and billing information, the communication network comprising :
- a pushing unit (7) for pushing products and/or services related information to the user handset, so as to enable the user handset to store and display a catalogue of products and/or services offline ;
- a retrieving unit (5) for retrieving, in response to the user handset having sent, in association with said user identifier, an order message for a selection of at least one product and/or service from said catalogue over the communication network, user related information stored in association with said user identifier in said database, so as to allow delivery and/or billing of said at least one product and/or service to the user.

12. An application server (4) for use in a communication network (2) managed by an operator for allowing a user (9) to order at least one product and/or service by means of a handset (1;1a-1c) according to the method as claimed in any one of claims 1 to 10, said user having registered with said operator of the communication network in order to communicate over said communication network, the registration of said user comprising the storage in a database (6;9) of the operator of a user identifier associated with user related information including at least one of a physical address and billing information, the application server comprising :
- a push controller for controlling the pushing of products and/or services related information to the user handset, so as to enable the user handset to store and display a catalogue of products and/or services offline ;
- a retrieving controller for controlling, further to receiving an order message for a selection of at least one product and/or service from said catalogue sent by the user handset in association with said user identifier, the retrieval of user related information stored in association with said user identifier in said database, so as to allow delivery and/or billing of said at least one product and/or service to the user.

13. A handset (1;1a-1c) arranged for being used by a user (9) having registered with an operator of a communication network (2) in order to communicate over said communication network, the registration of said user comprising the storage in a database (6;9) of the operator of a user identifier associated with user related information including at least one of a physical address and billing information, the handset comprising :
- a receiver for receiving products and/or services related information pushed from the communication network ;
- a memory and a display unit for storing and displaying a catalogue of products and/or services offline, based at least on the received products and/or services related information ;
- a selection unit for allowing the user to make a selection of at least one product and/or service from said catalogue ;
- a transmitter for sending, in association with said user identifier, an order message for said selection over the communication network.

14. The handset as claimed in claim 13, wherein the transmitter unit is arranged for sending, in association with said user identifier, an order message for said selection via a communication network, responsive to a single action being performed on the handset by the user.

15. A third party server (8) for offering products and/or services to users holding respective handsets (1;1a-1c) via a communication network (2), the users having registered with an operator of the communication network in order to communicate over said communication network, the registration of each user comprising the storage in a database (6,9) of the operator of a user identifier associated with user related information including at least one of a physical address and billing information, the third party server comprising :
- a transmitter for transmitting products and/or services related information over the communication network, so as to enable user handsets to store and display a catalogue of products and/or services offline ;
- a receiver for receiving an order message for a selection of at least one product and/or service made from said catalogue by a user, along with user related information retrieved in the communication network, so as to allow delivery and/or billing of said at least one product and/or service to said user.
